# EUROPÄISCHE PATENTSCHRIFT

(11) **EP 0 599 167 B1**
(45) Veröffentlichungstag und Bekanntmachung des Hinweises auf die Patenterteilung: **26.03.1997**
(21) Anmeldenummer: 93118425.3
(22) Anmeldetag: 15.11.1993
(51) Int. Cl.: B03B 5/44, B29B 17/02

(54) **Verfahren zur Trennung von Abfallgemischen**
Method of separating waste mixtures
Procédé pour la séparation de mélanges de déchets

(30) Priorität: 24.11.1992 DE 4239376
(43) Veröffentlichungstag der Anmeldung: 01.06.1994
(73) Patentinhaber: Klöckner-Humboldt-Deutz Aktiengesellschaft, 51149 Köln (DE)
(72) Erfinder: Jost, Manfred, D-5222 Stolberg (DE); Arhelger, Gunther, Dipl.-Ing., D-51503 Rösrath (DE)

(56) Entgegenhaltungen:
- EP-A- 0 469 903
- DE-A- 2 900 666
- DE-A- 2 926 233
- US-A- 4 426 281

## Beschreibung

Die Erfindung ist auf ein Verfahren zur Trennung von Abfallgemischen, insbesondere Gemische aus Kunststoffen, Verbundstoffen und Metallen, nach ihrer Dichte in einer Trennflüssigkeit, deren Dichte so gewählt ist, daß sie zwischen den Dichten der zu trennenden Feststoffen liegt, so daß ein Schwimmgut und ein Sinkgut erhalten wird, gerichtet.

Derartige Verfahren mit unterschiedlichen Trennflüssigkeiten sind bekannt. So werden in der EP-A-0 469 903 für die Trennung von Plastikmaterialien als Trennflüssigkeit Glykole oder Mischungen u. a. aus Wasser und Glykol oder Wasser und Salz vorgeschlagen.

Auch Verfahren zur Trennung von Abfallgemischen in Zentrifugalfeldern sind bekannt. So wird in der DE-A-29 26 233 für die Trennung eines Kunststoffgemisches im Hydrozyklon als Trennflüssigkeit eine Mischung aus Ethylenglykol und Wasser vorgeschlagen, womit eine Trennung bei einer Trenndichte von größer 1 g/cm³ ermöglicht wird.

In der DE-PS 29 00 666 wird über die Trennung von Kunststoffabfällen unterschiedlicher Dichte und Form mit Teilchen von max. 20 mm Kantenlänge in Hydrozyklonen berichtet. In dieser Patentschrift wird vorgeschlagen, für Dichten oberhalb von 1 g/cm³ als Trennflüssigkeit eine Mischung aus Wasser und NaCl (Kochsalz) oder CaCl₂ und für Dichten unterhalb von 1 g/cm³ als Trennflüssigkeit organische Flüssigkeiten oder Mischungen aus Wasser und organischen Flüssigkeiten, beispielsweise einer Mischung aus Wasser und Alkohol mit einer resultierenden Dichte von 0,97 g/cm³, zu verwenden.

Die für Trennflüssigkeitsdichten von kleiner 1 g/cm³ vorgeschlagene Verwendung von Alkohol erfordert wegen der hohen Alkoholdampfdrücke und der somit stattfindenden schnellen Verdunstung eine aufwendige Dichtekontrolle und Dichteregelung sowie die Installation explosionsgeschützter Anlagenteile.

Aufgabe der Erfindung ist es, bekannte Verfahren zur Trennung bei Trenndichten von kleiner 1 g/cm³ von Feststoffgemischen, die insbesondere Kunststoffgemische enthalten, durch entsprechende Wahl der Trennflüssigkeit in einfacher Weise so zu verbessern, daß sowohl eine Waschung nach erfolgter Trennung nicht mehr erforderlich wird und eine aufwendige Dichtekontrolle und Dichteregelung entfällt.

Die gestellte Aufgabe wird mit den Maßnahmen des Kennzeichnungsteils des Anspruchs 1 gelöst.

Durch die Maßnahme der Erfindung, als Trennflüssigkeit für eine Trennung bei einer Trenndichte von kleiner 1 g/cm³ eine Mischung aus Wasser und Butylglykol zu verwenden, sind Dichten zwischen 0,9 bis 1,0 g/cm³ lückenlos einstellbar. Butylglykol, dies ist der Trivialname für die Verbindung C₆H₁₄O₂ mit der richtigen Bezeichnung Ethylenglycolmonobutylether, hat einen Siedepunkt von 171 °C, einen Flammpunkt von 60 °C sowie einen Dampfdruck von 1,0 Torr (bei 20 °C). Eine aus Butylglykol und Wasser hergestellte Trennflüssigkeit wird sich demnach nicht so schnell durch Verdunstung in ihrer Dichte ändern, so daß aufwendige Dichtekontrollen und Dichteregelungen nicht erforderlich sind. Der geringe Dampfdruck sowie der mit 60 °C hohe Flammpunkt des Butylglykols schließt eine Explosionsgefahr praktisch aus.

Insbesondere werden durch die Verwendung von Butylglykolwassermischungen als Trennflüssigkeit die durch das Trennverfahren gewonnenen Kunststofffraktionen durch anhaftende Trennflüssigkeit nicht "artfremd" verunreinigt, d. h. die an den Kunststofffraktionen anhaftende Kohlenwasserstoffverbindung der Trennflüssigkeit stört auch nicht die weitere Verwendung der Kunststofffraktion als Recyclat, so daß eine aufwendige Waschung entfallen kann.

## Patentansprüche

1. Verfahren zur Trennung von Abfallgemischen, insbesondere Gemische aus Kunststoffen, Verbundstoffen und Metallen, nach ihrer Dichte in einer Trennflüssigkeit, deren Dichte so gewählt ist, daß sie zwischen den Dichten der zu trennenden Feststoffe liegt, so daß ein Schwimmgut und ein Sinkgut bei einer Trenngrenze von kleiner 1 g/cm³ erhalten wird, wobei die Trennflüssigkeit aus einer Mischung aus Wasser und einer mit Wasser unbegrenzt mischbaren, zur Gruppe der Kohlenwasserstoffe gehörenden Verbindung mit einer Dichte bei 20 °C von kleiner 1 g/cm³ besteht, dadurch gekennzeichnet, daß als Kohlenwasserstoffverbindung Ethylenglycolmonobutylether: C₆H₁₄O₂ mit einer Dichte bei 20 °C von 0,898 g/cm³ verwendet wird.

## Claims

1. A method for the separation of waste mixtures, especially mixtures of plastics, composite materials and metals, according to their density in a separating fluid which has a density chosen so that it lies between the densities of the solid materials to be separated, yielding floating material and settling material at a separation point of below 1 g/cm³, wherein the separating fluid comprises a mixture of water and a hydrocarbon group compound which can be mixed to any degree with water and which has density less than 1 g/cm³ at 20°C, characterized in that ethylene glycol monobutyl ether (C₆H₁₄O₂) with a density of 0.898 g/cm³ at 20°C is used as the hydrocarbon compound.

## Revendications

1. Procédé pour la séparation de mélanges de déchets, en particulier de mélanges de matières plastiques, de matières composites et de métaux, selon leur densité dans un liquide séparateur, dont la densité est choisie, de manière qu'elle se situe entre les densités des matières solides à séparer, pour obtenir un produit flottant et un produit plongeant avec une limite de séparation inférieure à 1 g/cm₃, tandis que le liquide de séparation se compose d'un mélange d'eau et d'un composé miscible à l'eau de manière illimitée, appartenant au groupe des hydrocarbures ayant une densité à 20°C inférieure à 1 g/cm₃,
caractérisé en ce que :
comme composé d'hydrocarbure, on utilise de l'éther monobutylique d'éthylèneglycol, _{C}6_{H}14_{O}2 avec une densité à 20°C de 0,898 g/cm₃.
